# EUROPEAN PATENT APPLICATION

(11) **EP 1 827 014 A2**
(43) Date of publication of application: **29.08.2007**
(21) Application number: 07101518.4
(22) Date of filing: 31.01.2007
(51) Int. Cl.: H04N 5/445

(54) **Broadcast program recorder, and methods of status display and management thereof**

(30) Priority: 24.02.2006 KR 20060018421
(71) Applicant: SAMSUNG ELECTRONICS CO., LTD., Suwon-si, Gyeonggi-do (KR)
(72) Inventor: Kang, Hee-beom, Gyeonggi-do (KR)
(74) Representative: Davies, Robert Ean

(57) **Abstract**

Provided are a broadcast program recorder (800), a method of displaying a status of the broadcast program recorder, and a method of managing the broadcast program recorder by checking a remaining storage space of a storage medium, displaying a usage status of the storage medium to a user, and managing stored broadcast programs so as to successfully record a broadcast program. In the broadcast program recorder and the method of managing the recorder, a storage space size required for a broadcast program to be recorded is predicted before recording, the predicted storage space size for the broadcast program and a predicted information on the change in a remaining available storage space, when the broadcast program is recorded, is displayed to a user, thereby enabling the user to manage the storage space for the broadcast program recorder efficiently.

## Description

Methods and apparatuses consistent with the present invention relate to a broadcast program recorder, and more particularly, but not exclusively, to a broadcast program recorder, a method of displaying a status of the broadcast program recorder, and a method of managing the broadcast program recorder by checking a remaining storage space of a storage medium using electronic program guide (EPG) information, displaying a usage status of the storage medium to a user, and managing stored broadcast programs so as to record a desired program successfully.

With development of digital broadcasting, interest in personal recording apparatuses has grown rapidly. A personal video recorder (PVR) is an apparatus which stores a broadcast program compressed in MPEG format in an internal or external storage medium such as a hard disk drive or an optical disk drive, whereby the stored broadcast program may be extracted and reproduced from the PVR later.

In the PVR, broadcast programs are stored automatically according to a user's preset preference or stored using a conventional function such as reserved recording or instant recording. However, the storage space for storing the broadcast programs in the PVR is limited. When the available storage space of the PVR is insufficient, only part of a desired broadcast program can be recorded instead of the whole broadcast program, thereby resulting in a user being unable to watch the whole broadcast program. Accordingly, a method of ensuring successful recording of the desired broadcast program, even when the available storage space is insufficient, is desirable.

Embodiments of the present invention provide a broadcast program recorder and a method of displaying a status enabling a user to record a desired broadcast program successfully by displaying information on the change in available storage space of the broadcast program recorder to the user before recording the broadcast program.

In addition, embodiments of the present invention provides a method of managing the broadcast program recorder by enabling the user to manage the storage space of the broadcast program recorder efficiently in regard to the limited storage space of the broadcast program recorder.

According to an aspect of the present invention, there is provided a method of displaying a status of a broadcast program recorder, the method comprising: acquiring electronic program guide (EPG) information about a broadcast program to be recorded; calculating a predicted size of a storage space for the broadcast program using the EPG information; and displaying information on the change in storage space of a predetermined storage medium storing the broadcast program, using the predicted size of the storage space for the broadcast program, when the broadcast program is recorded.

According to another aspect of the present invention, there is provided a broadcast program recorder comprising: a storage unit which stores a broadcast program; an EPG information reception unit which acquires EPG information on the broadcast program to be recorded; a calculation unit which calculates a predicted size of a storage space for the broadcast program to be recorded using the EPG information and information on the change in the storage space of the storage unit when the broadcast program is recorded; and a display unit which displays the information on the change in the storage space of the storage unit.

According to another aspect of the present invention, there is provided a method of managing a broadcast program recorded in a broadcast program recorder, the method comprising: calculating a predicted storage space size required for a broadcast program to be recorded; comparing the calculated predicted size of the storage space for the broadcast program with a remaining storage space of a predetermined storage medium and displaying a title of a broadcast program predicted to be deleted when the remaining storage space of the predetermined storage medium is insufficient; selecting a broadcast program to be deleted from among the broadcast programs predicted to be deleted; and deleting the selected broadcast program.

According to another aspect of the present invention, there is provided a broadcast program recorder comprising: a calculation unit which calculates a predicted storage space size required for a broadcast program to be recorded; a display unit which compares the calculated predicted size of storage space for the broadcast program with a remaining storage space of a predetermined storage medium and displays a title of a broadcast program predicted to be deleted when the remaining storage space of the predetermined storage medium is insufficient; and a control unit which deletes a selected broadcast program among the broadcast programs predicted to be deleted.

For a better understanding of the invention, and to show how embodiments of the same may be carried into effect, reference will now be made, by way of example, to the accompanying diagrammatic drawings in which:
FIG. 1 is a flowchart illustrating a method of displaying a status of a broadcast program recorder according to an exemplary embodiment of the present invention;
FIG. 2 is a flowchart illustrating the method of displaying a status of the broadcast program recorder illustrated in FIG. 1;
FIG. 3 is a diagram illustrating a storage status indication diagram according to an exemplary embodiment of the present invention;
FIG. 4 is a detailed diagram illustrating a storage space status illustrated in FIG. 3;
FIG. 5 is a flowchart illustrating a method of managing a broadcast program recorder according to an exemplary embodiment of the present invention;
FIG. 6 is a flowchart illustrating a method of managing a broadcast program recorder according to another exemplary embodiment of the present invention;
FIG. 7 is a block diagram illustrating a broadcast signal reception apparatus including a broadcast program recorder according to an exemplary embodiment of the present invention; and
FIG. 8 is a block diagram illustrating a broadcast program recorder according to an exemplary embodiment of the present invention.

The present invention will now be described more fully with reference to the accompanying drawings, in which exemplary embodiments of the invention are shown.

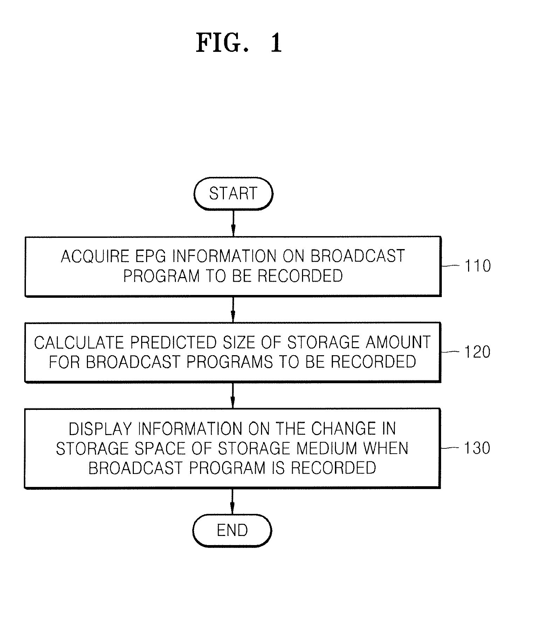

FIG. 1 is a flowchart illustrating a method of displaying a status of a broadcast program recorder according to an exemplary embodiment of the present invention.

According to the method of displaying the status of the broadcast program recorder, storage sizes for broadcast programs to be recorded are predicted before recording, and the predicted storage sizes for the broadcast programs and predicted change in a remaining available storage space are displayed to a user, thereby enabling the user to manage the storage space of the broadcast program recorder efficiently due to enhanced user convenience.

Referring to FIG. 1, in operation 110, electronic program guide (EPG) information for broadcast programs to be recorded is acquired. The broadcast programs to be recorded can be selected in various ways. For example, the broadcast programs to be recorded can be selected according to a user's preference or selected using a conventional method of reserved recording or instant recording.

In operation 120, the predicted storage size required for recording the selected broadcast programs is calculated using the acquired EPG information. Generally, broadcasting stations combine the EPG information including broadcast program information such as a program title, broadcast time, a parental level, a program size, and fee-based information by multiplexing the data into a broadcast signal and transmits the broadcast signal. Thus, the storage space size required to store the broadcast programs can be predicted using the broadcast time or the program size included in the EPG information. For example, when a news program broadcasted from nine o'clock p.m. to ten o'clock p.m. is reserved for recording, and if it is assumed that storage space of 1 Mbyte is required for recording a broadcast program for one minute, the storage space size required to store the news program can be predicted to be 60 Mbytes. Alternatively, when a storage space size for a broadcast program is included in the EPG information, the storage space required for recording the program can be predicted using the storage space size for the broadcast program included in the EPG information. In addition, the predicted storage space size for the broadcast program can be calculated by taking other factors, such as image quality and compression method, into account.

In operation 130, storage status information about the broadcast program recorder is provided to the user by displaying the predicted data size and information on the change in the storage space of the storage medium when the broadcast programs are recorded, in a form such as on screen display (OSD). The storage status information about the broadcast program recorder may include information such as a storage space size of the broadcast programs that have been already stored, the predicted storage space size for a broadcast program to be recorded, and a remaining storage space of the recording medium after recording. The user can keep track of the change in the storage space according to the progress of recording the broadcast program, from the storage status information. Accordingly, the user can manage the broadcast program recorder efficiently by selecting whether to delete a recorded broadcast program based on the information about the change in the storage space or by selectively deleting one or more broadcast programs from a list of broadcast programs predicted to be deleted, which will be described later.

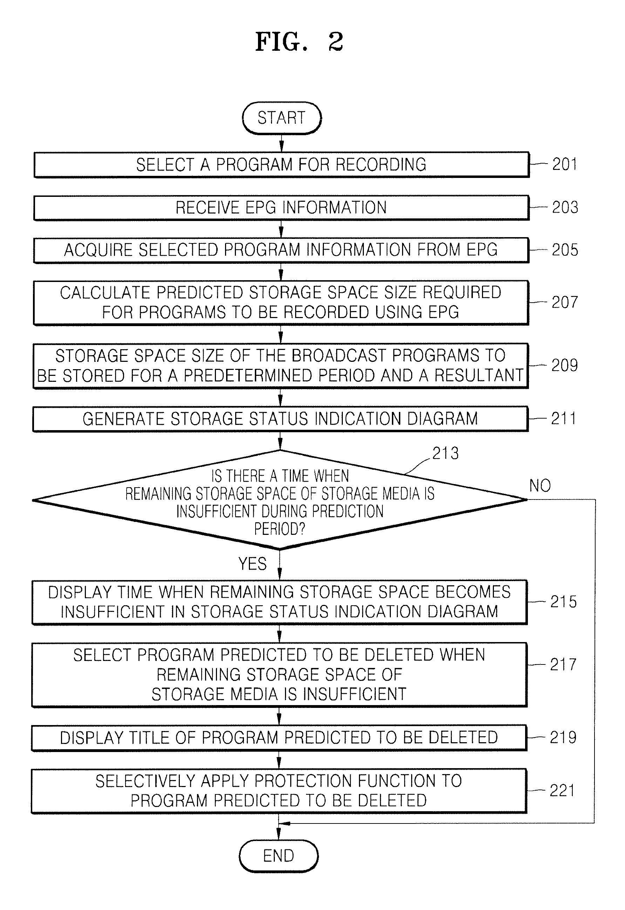

FIG. 2 is a flowchart illustrating the method of displaying a status of the broadcast program recorder illustrated in FIG. 1.

Referring to FIG. 2, in operation 201, a broadcast program for recording is selected using a user's preference or a method such as reserved recording or instant recording. Thereafter, in operation 203, the EPG information is received, and in operation 205, information about the broadcast program selected for recording is acquired from the EPG information.

In operation 207, the predicted storage space size required for the program to be stored is calculated using information included in the EPG information such as broadcast time and a data size of the broadcast program. As described above, the predicted storage space size required by the broadcast program to be stored may be calculated by taking a compression method or image quality of the broadcast program into account.

In operation 209, a size of the broadcast programs to be stored for a predetermined period and a resultant remaining storage capacity of the recording medium are calculated using the predicted storage space size required by the broadcast programs. For example, when the number of broadcast programs to be recorded on a daily basis is four, and the storage space required for recording the broadcast programs are 100 Mbytes, 60 Mbytes, 30 Mbytes and 50 Mybtes, respectively, it can be predicted that a total 240 Mbyte of storage space is required when all the broadcast programs are recorded on a corresponding date. In addition, remaining storage space of the recording medium after the recording is complete can be calculated by subtracting the predicted storage space size from the current remaining storage space.

In operation 211, a storage status indication diagram is generated based on the calculated storage space size required for the broadcast programs to be recorded for a predetermined period and a resultant remaining storage space of the recording medium. The storage status indication diagram includes information such as program titles, the number of programs to be recorded, a total storage space size for broadcast programs currently recorded, a storage space size required for future recording, remaining storage capacity after the future recording, and the like. The storage status indication diagram is displayed in a form of an OSD.

In operation 213, if the remaining storage space of the storage medium becomes insufficient, a time is predicted by comparing the predicted storage space size required for the broadcast programs to be recorded with the current remaining storage space of the storage medium. Generally, the EPG information includes information about broadcast programs for sixteen days from the current date, and accordingly the time when the remaining storage space of the storage medium becomes insufficient can be predicted by using the information about upcoming broadcast programs and the predicted size of the broadcast programs to be recorded. Here, the time when the remaining storage space of the storage medium becomes insufficient can be set to a time when a size of the remaining storage space of the storage medium becomes equal to or smaller than a predetermined critical value selected by the user. For example, a time when the remaining storage space of the storage medium is equal to or smaller than 20%, 10%, or 0% of the total storage capacity can be referenced for determining whether the remaining storage space becomes insufficient. When the critical value of the remaining storage space is set by the user to 20% of the total storage capacity, a time when the remaining storage space size of the storage medium becomes equal to or smaller than 20% of the total storage capacity is predicted to be the time when the remaining storage space becomes insufficient. The remaining storage space of the storage medium is calculated using the size of the broadcast programs to be recorded as described above. In this way, available storage space having a size equal to or smaller than a predetermined value can be determined and thus the user can prepare for a case when the storage space is insufficient by changing a reference for determining the time when the remaining storage space becomes insufficient according to the user's selection, rather than the critical value for the remaining storage space being set to 0% of the total storage capacity.

In operation 215, the user's attention is called by displaying a title of a broadcast program at a time when the remaining storage space of the storage medium becomes insufficient in the storage status indication diagram. For example, the title of the broadcast program scheduled for recording at the time when the remaining storage space of the storage medium becomes insufficient may be displayed in red warning letters or in a blinking form to call the user's attention.

By the processes described above, when the storage medium is predicted to be insufficient, one or more recorded broadcast programs may be deleted so as to record a desired broadcast program successfully. According to an embodiment of the present invention, arbitrary deletion of stored broadcast programs which the user wants to keep stored can be prevented and a desired broadcast program to be recorded can be recorded successfully by providing the user a list for programs predicted to be deleted when the storage space of the storage medium is insufficient and enabling the user to select the broadcast programs to be deleted.

In order to provide the user with the list of programs predicted to be deleted, broadcast programs predicted to be deleted when the storage space becomes insufficient are selected in operation 217, and in operation 219, the list of the broadcast programs predicted to be deleted is displayed to the user. Here, among stored broadcast programs that have not been reproduced for a predetermined period or have a low user preference, the broadcast programs that have been stored for a longer period of time than the majority of broadcast programs may be selected with a high priority for deletion. For example, when a stored broadcast program which is periodically broadcasted, such as a drama program, has not been reproduced for over a predetermined period, and any broadcast program corresponding to the drama has never been reproduced, it can be determined that the user does not have much interest in the drama program, even though the user selected the drama program for the recording, and thus the drama program may be selected as a program predicted to be deleted with a high priority.

In operation 221, the user can apply a protection function to a broadcast program, which the user wants to reproduce later or maintain the recording for, among broadcast programs included in the list of broadcast programs predicted to be deleted in order to prevent the protected broadcast program from being deleted. The broadcast program to which the protection function is applied is protected from being deleted in a deleting process performed thereafter.

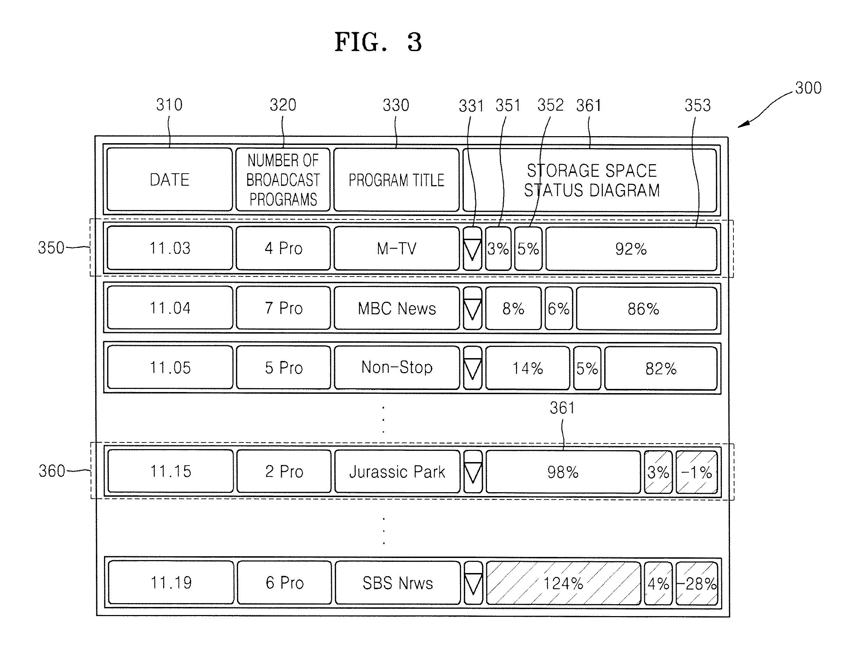

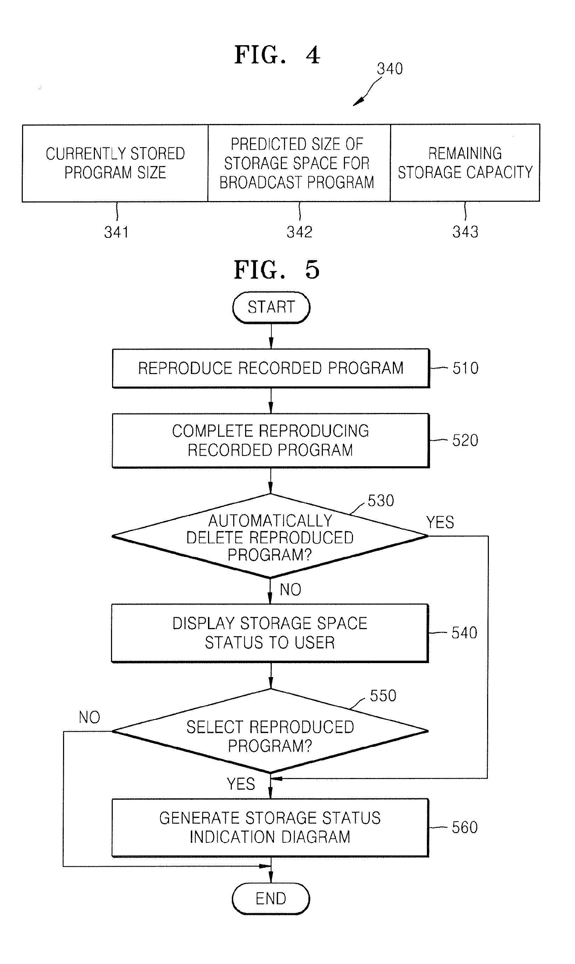

FIG. 3 is a diagram illustrating a storage status indication diagram according to an exemplary embodiment of the present invention. FIG. 4 is a detailed diagram illustrating a storage space status illustrated in FIG. 3.

The storage status indication diagram 300 is an information screen in OSD form providing information about broadcast programs to be recorded, a predicted storage space required for the recording, and a change in the storage space. Referring to FIG. 3, the storage status indication diagram 300 includes a date 310, the number of broadcast programs to be recorded 320, a program title 330, and a storage space status diagram 361.

As described above, generally, information about the broadcast programs to be broadcast up to sixteen days from the current date is included in the EPG information. Thus, if today is assumed to be Nov. 3, predicted storage space required to record broadcast programs to be recorded up to sixteen days from Nov. 3 can be calculated. The number of broadcast programs to be recorded 320 indicates the number of the broadcast programs to be recorded on a corresponding date, and the program title 330 indicates titles of the broadcast programs to be recorded on corresponding dates. In the program title 330, all the titles of the broadcast programs to be recorded on the corresponding date may be displayed. Alternatively, when a pop-up button 331 is arranged on the screen, only the first program title to be recorded on the corresponding date may be displayed in the program title 330, and when the user selects the pop-up button 331 on the screen, all the titles of the broadcast programs to be recorded on the corresponding date may be displayed, as illustrated in FIG. 3.

The storage space status diagram 361 is used to indicate change in the storage space size according to the progress of broadcast program recording. Referring to FIG. 4, a storage space status diagram 340 may include a currently stored program size 341, a predicted data size of the broadcast program 342, and a remaining storage capacity of the storage medium after recording the broadcast program 343. The user can predict the change in size of the storage space of the storage medium and required storage space according to the progress of the recording from the storage status indication diagram 300. Thus, the user can manage the broadcast program recorder by deleting a recorded broadcast program as needed. For example, referring to the storage space status information 350 that indicates programs to be recorded on Nov. 3 and the change in size of the storage capacity after the recording on that date, storage space 351 occupied by recorded programs before the recording on Nov. 3, storage space 352 required to record the programs on Nov. 3, and remaining storage capacity 353 after the recording of all the programs on Nov. 3 can be determined. In other words, the user can be informed that broadcast programs corresponding to 3% of the total storage capacity are recorded before recording four programs scheduled on Nov. 3, that the storage space required to record the four programs scheduled on Nov. 3 is 5% of the total storage capacity, and that the remaining storage space after the recording is 92% of the total storage capacity.

According to an exemplary embodiment of the present invention, the user can predict a time when the remaining storage space becomes insufficient by comparing the predicted storage space size required for the broadcast programs to be recorded with the remaining storage space of the storage medium. For example, referring to storage space status information 360 indicating programs to be recorded on Nov. 15 and the change in the storage space size after the recording on that date, 98% of the total storage capacity is predicted to be used before the broadcast programs are recorded on Nov. 15, and a predicted storage space size required to record the programs scheduled on Nov. 15 is 3%. Accordingly, the remaining storage space of the storage medium falls 1% short of the storage space size required to record all the programs scheduled to be recorded on Nov. 15. On a date when the remaining storage space is predicted to be insufficient, the titles of the broadcast programs to be deleted may be displayed in red warning letters or in a blinking form to call the user's attention.

In addition, according to an exemplary embodiment of the present invention, in order to record a broadcast program successfully when the remaining storage space becomes insufficient, the list of programs predicted to be deleted is displayed to the user, and the user can apply a protection function to a broadcast program, which the user wants to reproduce later or maintain the recording of, among broadcast programs included in the list of programs predicted to be deleted, thereby preventing the program to which the protection function is applied from being deleted.

The predicted data size and the status of the remaining storage space of the storage media included in the storage status indication diagram 300 according to an exemplary embodiment of the present invention are not limited to the form illustrated in FIG. 4 and can be changed to various interface forms. For example, total storage capacity of the storage medium, predicted data size, and remaining storage space may be explicitly displayed.

FIG. 5 is a flowchart illustrating a method of managing a broadcast program recorder according to an exemplary embodiment of the present invention. The method enables a user to selectively delete a broadcast program for which reproduction is completed so as to acquire available storage space in the storage medium.

Referring to FIG. 5, in operation 510, reproduction of a recorded program is started by the user, and in operation 520, the reproduction of the recorded program is completed. Thereafter, in operation 530, it is determined whether to automatically delete the reproduced program. Automatic deletion can be set by the user, so that a program for which reproduction has been completed is deleted in order to acquire available storage space in the storage medium. When the automatic deletion of a program, for which the reproduction has been completed, is set, the broadcast program recorder deletes the reproduced program, generates a storage status indication diagram illustrated in FIG. 3, and displays the storage status indication diagram to the user (560).

In operation 540, when the automatic deletion of the reproduced program is not set, the broadcast program recorder displays the storage status indication diagram illustrated in FIG. 3 to the user, so that the user can manually select whether to delete the reproduced program after the user checks the currently available storage space and the storage space size required. In addition, when the user selects to delete programs under the same title, such as a program series, the broadcast program recorder enables the user to additionally determine whether to delete other programs under the same title so as to provide the convenience of deleting undesired broadcast programs at once.

In operation 550, when the user selects to delete the reproduced program, the reproduced program is deleted, and in operation 560, the storage status indication diagram is updated and displayed to the user.

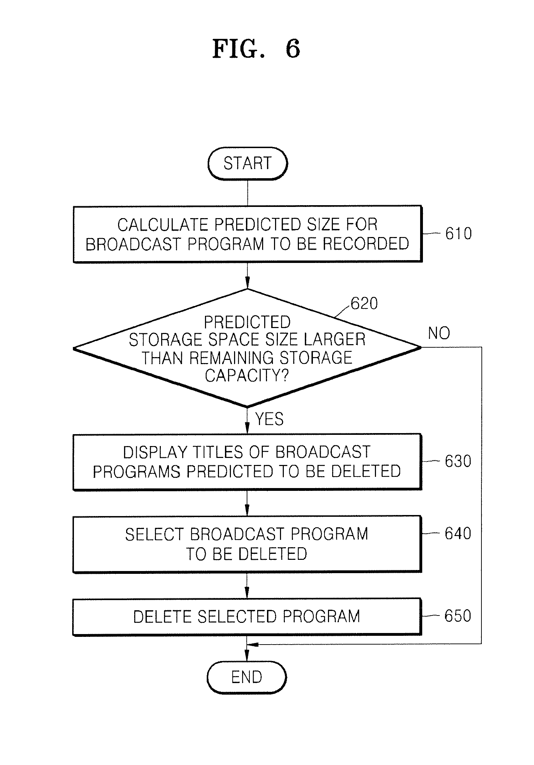

FIG. 6 is a flowchart illustrating a method of managing a broadcast program recorder according to another embodiment of the present invention. In the method, a storage space size required to record a broadcast program is predicted before recording the broadcast program, and the predicted storage space size is compared with the currently remaining storage space to provide the user with a list of programs to be deleted according to a predetermined priority in order to acquire available storage space of the storage medium before recording.

Referring to FIG. 6, in operation 610, the predicted storage space size required for the broadcast program to be recorded is calculated. As described above, the predicted storage space size can be calculated using information such as broadcast time included in the EPG information.

In operation 620, the predicted storage space size calculated in operation 610 is compared with the currently remaining storage space of the storage medium, and when the predicted storage space size is larger than the currently remaining storage space, that is, a case when the remaining storage space of the storage medium is insufficient for storing the program to be recorded, broadcast programs predicted to be deleted are displayed, in operation 630. As described above, among stored broadcast programs which have not been reproduced for over a predetermined period or are of a low preference of the user, a broadcast program that has been stored for the longest time is selected preferentially.

In operation 640, the user selects a broadcast program for deletion from among the broadcast programs predicted to be deleted. At this time, the user can apply a protection function to a broadcast program, which the user wants to reproduce later or maintain the recording for, so as not to delete the program.

In operation 650, the broadcast program selected by the user is deleted from the storage medium, thereby acquiring available storage space.

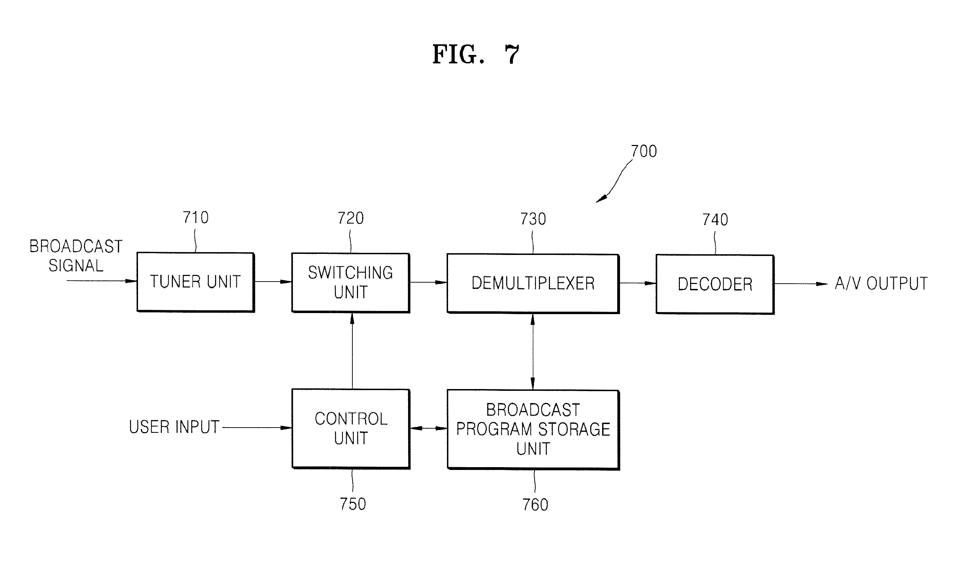

FIG. 7 is a block diagram illustrating a broadcast signal reception apparatus including a broadcast program recorder according to an exemplary embodiment of the present invention.

Referring to FIG. 7, the broadcast signal reception apparatus 700 includes a tuner unit 710, a switching unit 720, a demultiplexer 730, a decoder 740, a control unit 750, and a broadcast program storage unit 760. The tuner unit 710 receives and demodulates a broadcast signal transmitted from a broadcast station, and the switching unit 720 switches the demodulated signal selectively. The demultiplexer 730 divides the switched signal into video and audio signals, and the decoder 740 decodes the divided video and audio signals. The control unit 750 stores information included in the EPG about a broadcast program selected by the user and updates the information about the broadcast program by comparing newly received EPG with the existing EPG, and controls whether to store the broadcast program based on the user's selection. The broadcast program storage unit 760 stores the broadcast program according to the control of the control unit 750. The broadcast program recorder according to an exemplary embodiment of the present invention corresponds to the broadcast program storage unit 760.

In the broadcast signal reception apparatus 700, the tuner unit 710 receives and demodulates the broadcast signal and outputs the demodulated broadcast signal. The output signal from the tuner unit 710 is applied to the demultiplexer 730 through the switching unit 720, thereby being divided into the video signal, the audio signal, and additional information including the EPG. The decoder 740 divides and outputs the video and audio signals. In addition, in a case when the received broadcast signal is to be stored, the divided video and audio signals are applied to the broadcast program storage unit 760 and stored.

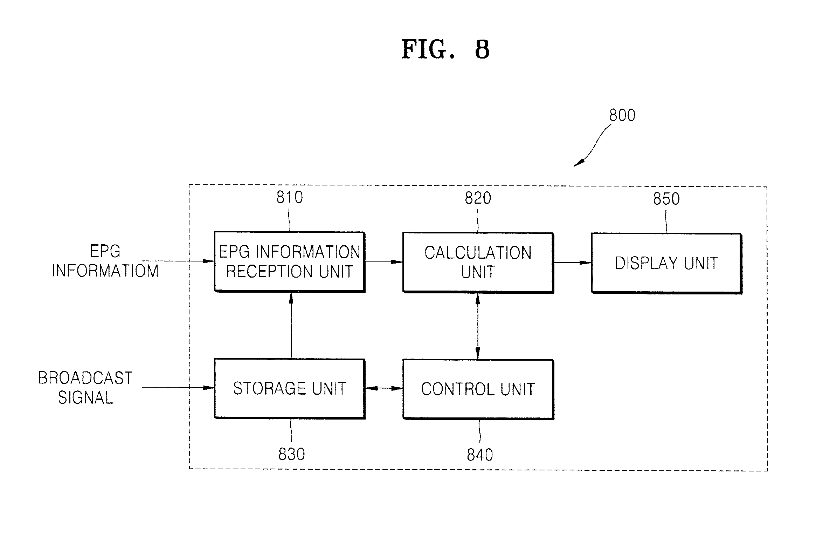

FIG. 8 is a block diagram illustrating a broadcast program recorder according to an exemplary embodiment of the present invention.

Referring to FIG. 8, the broadcast program recorder 800 includes an EPG information reception unit 810, a calculation unit 820, a storage unit 830, a control unit 840, and a display unit 850. Here, the control unit 750 of the broadcast reception apparatus 700 may be used as the control unit 840.

The EPG information reception unit 810 acquires EPG information about the broadcast program to be recorded.

The calculation unit 820 calculates a predicted storage space size required to record the broadcast program using broadcast time information or program size information included in the acquired EPG information. The calculation unit 820 calculates a storage space size required for recording a plurality of broadcast programs for a predetermined period and compares the calculated storage space size required for recording the plurality of broadcast programs with a remaining storage space of the storage unit 830, and predicts a time when the remaining storage space will become insufficient, that is a time when the remaining storage space of the storage unit 830 is equal to or smaller than a predetermined critical value.

The storage unit 830 stores a broadcast program to be recorded under the control of the control unit 840.

The display unit 850 displays the storage space status diagram indicating the change in the storage space calculated by the calculation unit 820 in OSD format, thereby providing the user with status information about the storage medium included in the broadcast program recorder. As described above, the storage status information about the broadcast program may include information such as a size of stored broadcast programs, predicted data size information about the broadcast program to be recorded, and remaining storage space information about the recording medium after the recording. The display unit 850 calls the user's attention by displaying the title of the broadcast program scheduled for recording at a time when the remaining storage space of the storage medium becomes insufficient in the storage status indication diagram. The display unit 850 displays a list of broadcast programs predicted to be deleted to the user when the remaining storage space becomes insufficient, thereby enabling the user to manage the limited storage space of the storage medium efficiently. As described above, among the stored broadcast programs which have not been reproduced for a predetermined period or those of low preference of the user, a broadcast program which has been stored for a longer period of time than the majority of broadcast programs may be selected with a high priority to be included in the list of the programs predicted to be deleted.

The control unit 840 controls the storage unit 830, so that the programs selected by the user for deletion are deleted, and applies the protection function to programs the user wants to continue storing, so that the programs are not deleted.

The control unit 840, when reproduction of a broadcast program stored in the storage unit 830 is completed, performs automatic deletion of the reproduced program according to whether the automatic deletion of the reproduced program is set, thereby acquiring available storage space of the storage medium. The display unit 850 updates and displays changes in the storage status of the storage unit 830 when the program is deleted.

According to an embodiment of the present invention as described above, the available storage space of the storage medium is checked before recording of the broadcast program is performed, and thus the user can be prepared for a shortage of available storage space of the storage medium, thereby providing an environment under which the desired broadcast program can be recorded successfully.

The invention can also be embodied as computer readable codes on a computer readable recording medium. The computer readable recording medium is any data storage device that can store data which can be thereafter read by a computer system. Examples of the computer readable recording medium include read-only memory (ROM), random-access memory (RAM), CD-ROMs, magnetic tapes, floppy disks, optical data storage devices, and carrier waves such as data transmission through the Internet. The computer readable recording medium can also be distributed over network coupled computer systems so that the computer readable code is stored and executed in a distributed fashion.

While the present invention has been particularly shown and described with reference to exemplary embodiments thereof, it will be understood by those skilled in the art that various changes in form and details may be made therein without departing from the spirit and scope of the present invention as defined by the appended claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A method of displaying a status of a broadcast program recorder, the method comprising:
acquiring (110) electronic program guide (EPG) information about a broadcast program to be recorded;
calculating (120) a predicted size of a storage space for the broadcast program using the EPG information; and
displaying (130) information on change in storage space of a predetermined storage medium storing the broadcast program, using the predicted size of the storage space for the broadcast program, when the broadcast program is recorded.

2. The method of claim 1 or 2, wherein the predicted size of the storage space for the broadcast program to be recorded is calculated using a broadcast start time and broadcast end time for the broadcast program included in the EPG information.

3. The method of any preceding claim, wherein the predicted storage space size for the broadcast program is calculated using size information on the broadcast program included in the EPG information.

4. The method of claim 1, wherein the calculation of the predicted size of the storage space for the broadcast program to be recorded further comprises:
calculating a storage space size required to record a plurality of broadcast programs to be recorded for a predetermined period; and
predicting a time when a remaining storage space of the storage medium becomes insufficient, at which time the remaining storage space is equal to or smaller than a predetermined critical value, by comparing the storage space size required for recording the plurality of broadcast programs with the remaining storage space of the storage medium, and wherein
the displaying of information on the change in the storage space further comprises displaying the information on the change in the storage space for the predetermined period and for the predicted time when the remaining storage space becomes insufficient.

5. The method of any preceding claim, wherein the displaying of information on the change in the storage space of the storage medium comprises displaying information about a size of the storage space for the broadcast programs stored before the recording of the broadcast program, information about the predicted storage space size required for the broadcast program to be recorded, and information about remaining storage space of the storage medium when the recording of the broadcast program is completed.

6. The method of any preceding claim, further comprising:
predicting (610) a time when the remaining storage space of the storage medium becomes insufficient, that is, a time when the remaining storage space is equal to or smaller than a predetermined critical value, by comparing the calculated storage space size required for recording the broadcast program with a currently remaining storage space of the storage medium; and
displaying (630) a list of programs predicted to be deleted when the remaining storage space of the storage medium becomes insufficient.

7. The method of claim 6, wherein the list of programs predicted to be deleted includes a broadcast program which has not been reproduced for a predetermined period and which has been stored for a longer period of time than a majority of a plurality of broadcast programs from among broadcast programs stored in the storage medium.

8. The method of claim 6 or 7, further comprising applying a protection function to a broadcast program which is not to be deleted, based on a user's input, among the broadcast programs included in the list of the broadcast programs predicted to be deleted.

9. A broadcast program recorder (800) comprising:
a storage unit (830) which stores a broadcast program;
an electronic program guide (EPG) information reception unit (810) which acquires EPG information on the broadcast program to be recorded;
a calculation unit (820) which calculates a predicted size of a storage space for the broadcast program to be recorded using the EPG information and information on the change in the storage space of the storage unit when the broadcast program is recorded; and
a display unit (850) which displays the information on the change in the storage space of the storage unit.

10. The broadcast program recorder of claim 9, wherein the predicted storage space size required for the broadcast program to be recorded is calculated using a broadcast start and end time for the broadcast program included in the EPG information.

11. The broadcast program recorder of claim 9 or 10, wherein the calculation unit calculates the predicted storage space size required for the broadcast program to be recorded using size information about the broadcast program included in the EPG information.

12. The broadcast program recorder of any of claims 9-11, wherein the calculation unit (820) calculates a storage space size required to record a plurality of broadcast programs for a predetermined period and predicts a time when a remaining storage space of the storage unit becomes insufficient, at which time the remaining storage space is equal to or smaller than a predetermined critical value, by comparing the storage space required for recording the plurality of broadcast programs with the remaining storage space of the storage unit (830).

13. The broadcast program recorder of claim 12, wherein the display unit (850) displays the information on the change in the storage space for the predetermined period and the predicted time when the remaining storage space becomes insufficient.

14. The broadcast program recorder of any of claims 9-13, wherein the display unit (850) displays information about the size of the storage space for the broadcast program stored before the recording of the broadcast programs, information about the predicted storage space size for the broadcast program to be recorded, and information about remaining storage space of the storage medium after the recording of the broadcast program is completed.

15. The broadcast program recorder of any of claims 9-14, wherein the display unit (850) displays a list of programs predicted to be deleted when the remaining storage space of the storage unit becomes insufficient.

16. The broadcast program recorder of claim 15, wherein the list of the programs predicted to be deleted includes a broadcast program which has not been reproduced for a predetermined period and which has been stored for a longer period of time than a majority of plurality of broadcast programs, from among broadcast programs stored in the storage unit.

17. The broadcast program recorder of claim 15 or 16, further comprising a control unit (840) which applies a protection function to a broadcast program which is not to be deleted, based on a user's input, among the broadcast programs included in the list of the broadcast programs predicted to be deleted.

18. A method of managing a broadcast program recorded in a broadcast program recorder, the method comprising:
calculating (207) a predicted storage space size required for a broadcast program to be recorded;
comparing the calculated predicted size of the storage space for the broadcast program with a remaining storage space of a predetermined storage medium and displaying (219) a title of a broadcast program predicted to be deleted if the remaining storage space of the predetermined storage medium is insufficient;
selecting a broadcast program to be deleted from among the broadcast programs predicted to be deleted; and
deleting the selected broadcast program.

19. The method of claim 18, wherein the predicted size of storage space for the broadcast program is calculated using broadcast time information or size information for the broadcast program included in electronic program guide (EPG) information about the broadcast program to be recorded .

20. The method of claim 18 or 19, wherein the program predicted to be deleted is a broadcast program which has not been reproduced for a predetermined period and which has been stored for a longer period of time than a majority of a plurality of broadcast programs, among broadcast programs stored in the storage medium.

21. A broadcast program recorder comprising:
a calculation unit (820) which calculates a predicted storage space size required for a broadcast program to be recorded;
a display unit (850) which compares the calculated predicted size of storage space for the broadcast program with a remaining storage space of a predetermined storage medium and displays a title of a broadcast program predicted to be deleted when the remaining storage space of the predetermined storage medium is insufficient; and
a control unit (840) which deletes a selected broadcast program among the broadcast programs predicted to be deleted.

22. The broadcast program recorder of claim 21, wherein the calculation unit (820) calculates the predicted size of the storage space for the broadcast program using broadcast time information or size information for the broadcast program included in electronic program guide (EPG) information about the broadcast program to be recorded.

23. The broadcast program recorder of claim 21 or 22, wherein the broadcast program predicted to be deleted is a broadcast program which has not been reproduced for a predetermined period and which has been stored for a longer period of time than a majority of plurality of broadcast programs, from among recorded broadcast programs.
